# EUROPÄISCHE PATENTSCHRIFT

(11) **EP 0 405 275 B1**
(45) Veröffentlichungstag und Bekanntmachung des Hinweises auf die Patenterteilung: **08.12.1993**
(21) Anmeldenummer: 90111416.5
(22) Anmeldetag: 18.06.1990
(51) Int. Cl.: B60Q 1/26

(54) **Warnleuchte für Fahrzeuge**
Warning light for vehicle
Feu de signalisation pour véhicule

(30) Priorität: 24.06.1989 DE 3920763
(43) Veröffentlichungstag der Anmeldung: 02.01.1991
(73) Patentinhaber: Hella KG Hueck & Co., 59552 Lippstadt (DE)
(72) Erfinder: Schreckenberg, Franz-Josef, D-4799 Borchen (DE)

(56) Entgegenhaltungen:
- GB-A- 1 560 309
- US-A- 4 320 385

## Beschreibung

Die Erfindung bezieht sich auf eine Warnleuchte für Fahrzeuge mit den Merkmalen:
- die Warnleuchte weist eine lichtdurchlässige Abdeckhaube auf, welche auf den Leuchtensockel aufgesetzt ist,
- der Leuchtensockel weist zum Aufstecken auf einen rohrförmigen Träger auf seiner Unterseite eine zentrale Aufnahmevorrichtung auf,
- innerhalb der lichtdurchlässigen Abdeckhaube ist um eine ortsfeste Glühlampe herum ein Reflektor drehbar angeordnet,
- der Reflektor ist mit dem Abtriebrad eines mit einem Elektromotor gekoppelten Getriebes verbunden und um einen hohl und zylinderförmig ausgeführten Lagerzapfen verdrehbar gelagert,
- durch eine öffnung des Abtriebrades und des Trägers des Elektromotors verlaufen zwei Stromzuführungen zur Glühlampe hin,
- eine der beiden Stromzuführungen ist zumindest in ihrer Längsausdehnung starr ausgeführt und dient an der Unterseite des Leuchtensockels für einen Pol der Glühlampe als Steckanschluß.

Eine solche Warnleuchte ist aus der DE-OS 21 35 359 bekannt. Bei dieser Leuchte dient als Masseleitung zur Glühlampe hin ein durch den Motorträger und das Abtriebrad hindurchgehendes metallisches Rohr, dessen aus der Unterseite des Leuchtensockels herausragender Endabschnitt auf einen rohrförmigen Träger aufsteckbar ist. Somit dient dieser Endabschnitt nicht nur als Aufnahmevorrichtung für den rohrförmigen Träger, sondern auch für die Masseleitung der Glühlampe als Steckanschluß. Beim Aufstecken der Warnleuchte auf den rohrförmigen Träger ist jedoch nicht eine Pluskontaktierung zur Glühlampe hin gegeben, da diese über ein separates elektrisches Kabel erfolgt. Auch die elektrischen Verbindungen zum Elektromotor hin bestehen aus elektrischen Kabeln. Die elektrischen Kabel sind sehr umständlich und zeitaufwendig zu montieren.

Aus dem DE-GM 84 27 524 ist eine Warnleuchte bekannt, bei welcher ebenfalls ein metallisches Rohr und eine Pluszuleitung durch eine öffnung des Motorträgers und des Abtriebrades hindurchgehen.

Aufgabe der Erfindung ist es, die im Gattungsbegriff beschriebene Warnleuchte für Fahrzeuge derart zu verbessern, daß die elektrische Verbindung von einem beide Pole aufweisenden Steckanschluß der Leuchte sowohl zur Glühlampe bzw. ihres Lampenträgers hin als auch zu den Kontaktanschlüssen des Elektromotors hin durch eine sehr einfache und leichte Montage ohne besondere Hilfsmittel vorgenommen werden kann, ohne daß Fehlschaltungen möglich sind. Darüber hinaus sollen nicht nur der Motorträger und das Abtriebrad aus einer Richtung montierbar sein, sondern auch zusammen mit diesen Bauteilen die elektrischen Verbindungen. Diese Aufgabe wird nach der Erfindung dadurch gelöst, daß
- die beiden Stromzuführungen zur Glühlampe hin aus zwei Kontaktstäben bestehen, welche in einem Abstand zueinander durch den aus Kunststoff bestehenden Lagerzapfen hindurchgehen,
- unterhalb des Motorträgers Leiterbahnen verlaufen, welche die Kontaktstäbe mit dem jeweiligen Kontaktanschluß des Elektromotors elektrisch verbinden,
- die Kontaktstäbe durch eine öffnung in der Leiterbahn und/oder durch eine öffnung eines im Inneren des Lagerzapfens angeformten Ansatzes hindurchgesteckt sind,
- auf der Unterseite des Leuchtensockels für die Glühlampe und den Elektromotor ein gemeinsamer für die Stromzuleitung dienender Anschluß und ein gemeinsamer für die Masseleitung dienender Anschluß von nach unten weisenden Endabschnitten beider Kontaktstäbe oder eines Kontaktstabes und einer Leiterbahn gebildet werden.

Bei einer solchen Lösung bestehen die elektrischen Verbindungen zur Glühlampe und zum Elektromotor hin im wesentlichen aus den zwei Kontaktstäben und zwei Leiterbahnen. Durch die öffnungen in den Leiterbahnen bzw. durch die öffnungen im Inneren des Lagerzapfens sind die Kontaktstäbe zueinander auf Abstand gehalten. Somit müssen die Kontaktstäbe nicht mit einer Isolierschicht umgeben sein.

Die Kontaktierung zwischen den Kontaktstäben und den Leiterbahnen ist sehr vorteilhaft gelöst, wenn die Kontaktstäbe in die öffnungen der Leiterbahnen klemmend eingesteckt oder klemmend durchgesteckt sind.

Weiterhin ist es sehr vorteilhaft, wenn ein Kontaktstab von einem zentral durch den hohl und zylinderförmig ausgeführten Lagerzapfen verlaufenden Befestigungsbolzen gebildet wird, welcher mit einer Verdickung an der Unterseite des Leuchtensockels anliegt und mit seinem Gewindeschaft in eine Mutter eingreift, welche unter Zwischenschaltung eines Isolierteils gegen die Stirnfläche des Lagerzapfens drückt. Bei einer solchen Lösung ist die Montage des Leuchtensockels, des Motorträgers und des Abtriebrades aus einer Richtung sehr einfach und leicht, da diese auf den Befestigungsbolzen aufgesteckt werden. Hierbei ist es zweckmäßig, wenn die Verdickung des Befestigungsbolzens als Handhabe zum Verdrehen des Befestigungsbolzens dient. Dadurch kann der Gewindeschaft in die Mutter eingedreht werden, bis diese das Isolierteil fest gegen den Lagerzapfen drückt.

In diesem Zusammenhang ist es weiterhin vorteilhaft, wenn die Mutter von einer aus einem Blechstreifen hergestellten Kontaktfeder gebildet wird, welche um eine quer zu ihrer Längsausdehnung verlaufenden Biegelinie V-förmig gebogen ist, wobei in einen Schenkel der V-Form das Muttergewinde eingebracht ist und in den anderen Schenkel eine Vertiefung eingedrückt ist, deren Grund unter Vorspannung an den Mittelpol der Glühlampe anliegt. Dadurch dient die Kontaktfeder nicht nur als Befestigungselement für den Motorträger und das Abtriebrad, sondern auch als Stromzuführung für die Glühlampe. Außerdem läßt sich bei einer solchen Lösung durch Niederdrücken des oberen Schenkels der V-förmigen Kontaktfeder die Glühlampe leicht und schnell montieren bzw. demontieren.

Vorteilhaft ist es weiterhin, wenn der in einem Abstand zu dem Befestigungsbolzen verlaufende Kontaktstab von einem Blechstreifen gebildet wird, welcher über einen Lampenträger mit dem Sockel der Glühlampe elektrisch verbunden ist. Dabei ist es zweckmäßig, wenn der Blechstreifen und der Lampenträger einteilig aus einer Blechplatine hergestellt sind. Eine solche Lösung ist wegen der Einteiligkeit des Lampenträgers und des Kontaktstabes nicht nur kostengünstig herstellbar, sondern auch einfach zu montieren. Hierbei ist es zweckmäßig, wenn der Lampenträger zwischen dem Isolierteil und der Stirnfläche des Lagerzapfens fest eingespannt ist. Dadurch ist durch den Befestigungsbolzen und die Kontaktfeder nicht nur der Motorträger und das Abtriebrad an dem Leuchtensockel befestigt, sondern auch der Lampenträger und der mit ihm einteilig ausgeführte Kontaktstab. In diesem Zusammenhang ist es weiterhin vorteilhaft, wenn der Lampenträger quer zur Drehachse des Reflektors gesehen U-förmig ausgeführt ist, wobei der eine Schenkel an der Stirnfläche des Lagerzapfens anliegt und den Lagerzapfen radial nach außen überragt, während gegen die Innenseite des anderen Schenkels der Flansch der Glühlampe durch die Kontaktfeder gedrückt wird. Da der Lampenträger den Lagerzapfen radial nach außen überragt, fixiert dieser das Abtriebrad in axialer Richtung.

Ein weiterer Vorteil ist es, wenn die Kontaktfeder mit dem als Mutter dienenden Schenkel zwischen zwei Ansätze des Isolierteils eingesetzt ist. Dadurch ist die Mutter beim Eindrehen des Gewindeschaftes des Befestigungsbolzens in die Mutter gegen Verdrehen gesichert.

Ein weiterer Vorteil ist es, wenn eine in einen Ansatz im Inneren des Lagerzapfens eingebrachte öffnung als Schlitz ausgeführt ist, in welchen der von einem Blechstreifen gebildete Kontaktstab eingesteckt ist. Bei einer solchen Lösung ist durch einfaches Einschieben des Blechstreifens in den Schlitz dieser genau zur Kontaktstelle der entsprechenden Leiterbahn positioniert. Ebenfalls ist es vorteilhaft, wenn eine in einen Ansatz im Inneren des Lagerzapfens eingebrachte öffnung von einer den Befestigungsbolzen aufnehmenden Hülse gebildet wird, welche durch Stege an die Innenseite des Lagerzapfens angebunden ist. Hierbei ist es zweckmäßig, wenn an der dem Leuchtensockel zugewandten Stirnfläche der Hülse ein Leiterbahnabschnitt anliegt, in den die den Befestigungsbolzen klemmend aufnehmende öffnung eingebracht ist. Eine solche Lösung ist besonders vorteilhaft, wenn die Leiterbahnen an der Unterseite des Motorträgers angebracht sind, da beim Aufsetzen des Motorträgers auf den Befestigungsbolzen dieser den die öffnung aufweisenden Leiterbahnabschnitt nicht nach oben hin biegen kann, da dieser an der Stirnfläche der Hülse anliegt.

In diesem Zusammenhang ist es weiterhin vorteilhaft, wenn die beiden Leiterbahnen aus einer gemeinsamen Blechplatine herausgestanzt sind. Hierbei ist es zweckmäßig, wenn die Hülse, durch welche der Befestigungsbolzen hindurchgeht, zur Hauptfläche der Leiterbahnen beabstandet ist und der an ihr anliegende Leiterbahnabschnitt so aus der Hauptebene der Leiterbahn herausgebogen ist, daß er mit seinem Endabschnitt an der Stirnfläche der Hülse anliegt und wenn aus dem Bereich der Blechplatine, durch welche der Befestigungsbolzen hindurchgeht, eine Fahne ausgeschnitten ist, welche zur Aufnahmevorrichtung des Rohres hin abgebogen ist und in einem geringen Abstand etwa parallel zum Befestigungsbolzen verläuft. Bei einer solchen Lösung dient die Fahne der Leiterbahn beim Aufschieben des Steckers auf den Steckanschluß des Befestigungsbolzens als Schleifkontakt.

Bei einer besonders vorteilhaften Weiterbildung der Erfindung weisen beide Leiterbahnen einen Flachsteckeranschluß auf, welche von parallel zueinander verlaufenden Enden der Leiterbahnen gebildet werden. Diese Flachsteckeranschlüsse der Leiterbahnen dienen als elektrischer Anschluß, wenn die Leuchte auf einer flächigen Karosseriewandung befestigt wird.

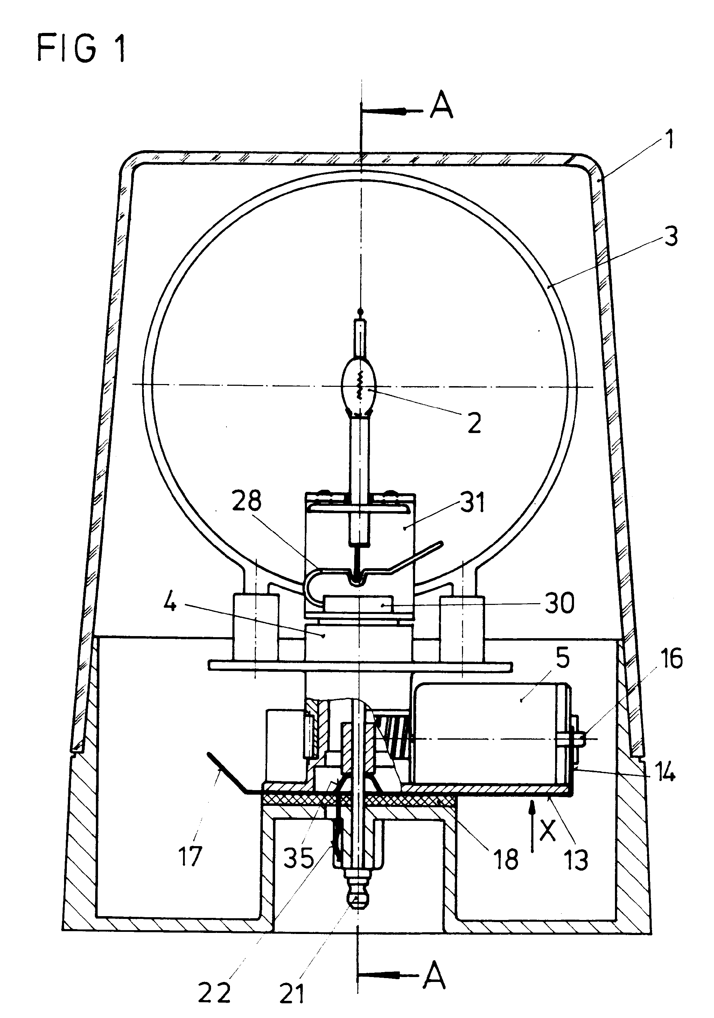

Die Erfindung ist in der Zeichnung dargestellt, und zwar zeigt
Figur 1 einen mittleren vertikalen Längsschnitt durch eine Warnleuchte für Fahrzeuge,

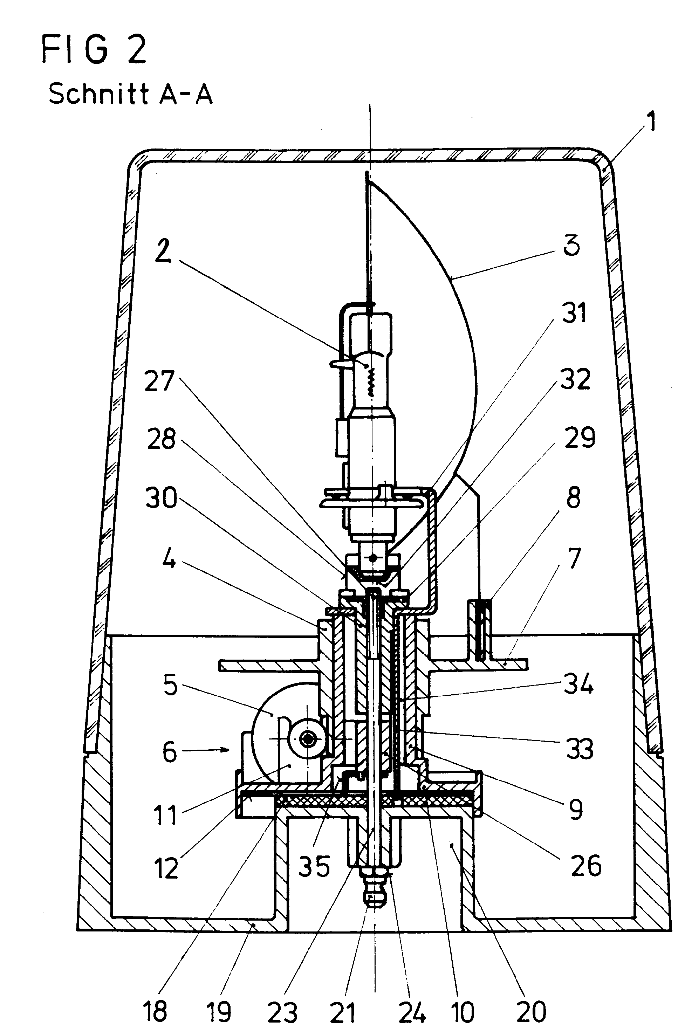

Figur 2 einen Schnitt nach der Linie A-A und
Figur 3 eine Ansicht aus Richtung X auf die aus einer Blechplatine ausgestanzten Leiterbahnen.

Die Warnleuchte weist innerhalb einer lichtdurchlässigen Abdeckhaube (1) einen um eine ortsfeste Glühlampe (2) verdrehbaren Reflektor (3) auf. Der Reflektor (3) ist an dem Abtriebrad (4) eines mit dem Elektromotor (5) gekoppelten Schneckengetriebes (6) befestigt. Das Abtriebrad (4) ist aus Kunststoff hergestellt und hülsenförmig ausgeführt. Die Hülse weist an ihrer Mantelfläche einen radial nach außen verlaufenden Flansch (7) auf, an dessen oberer Seite Ansätze (8) angeformt sind, in dessen Schlitze Befestigungsarme des Reflektors (3) selbstklemmend eingeschoben sind. Das hülsenförmige Abtriebrad (4) ist auf den hohl und zylinderförmig ausgeführten Lagerzapfen (9) des aus Kunststoff bestehenden Motorträgers (10) aufgeschoben. Der Motorträger (10) ist plattenförmig ausgeführt und verläuft mit seiner Hauptebene etwa senkrecht zur Verdrehachse des Reflektors (3). Auf die Oberseite des plattenförmigen Motorträgers (10) ist der Elektromotor (5) selbstrastend in nach oben geöffnete Schlitze der an den Motorträger angeformten Vorsprünge (11) eingesetzt. Hierbei verläuft die Motorwelle senkrecht zur Drehachse des Reflektors (3). An dem aus dem Gehäuse des Elektromotors (5) ragenden Endabschnitt der Motorwelle ist die Schnecke des Getriebes (6) befestigt. Die Schnecke greift unterhalb des Flansches (7) in die in die Mantelfläche des Abtriebrades (4) eingebrachte Verzahnung ein.

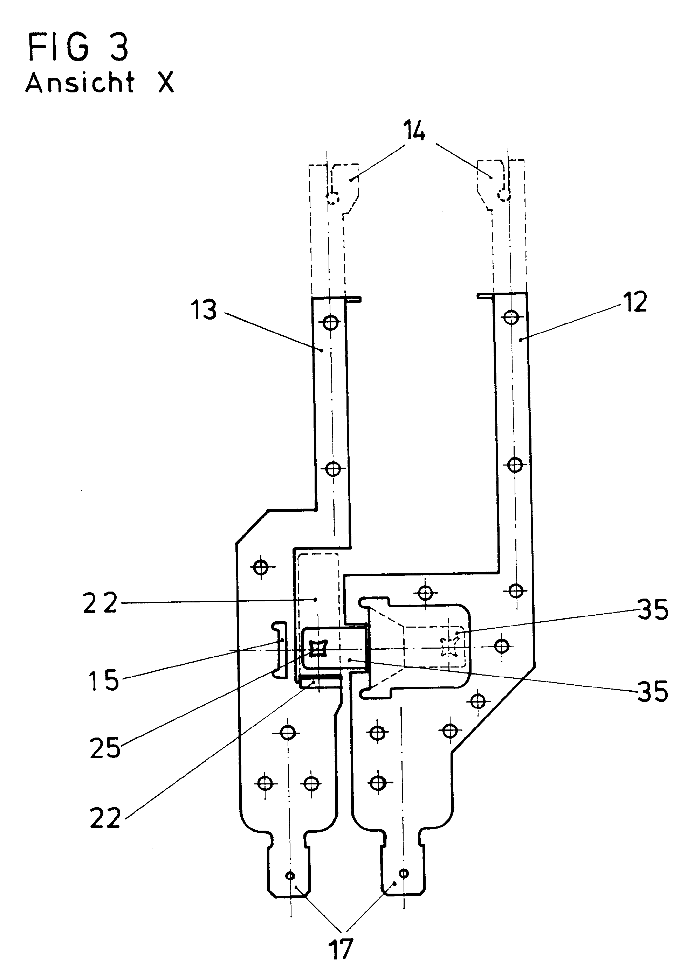

An der Unterseite des plattenförmigen Motorträgers (10) sind zwei Leiterbahnen (12 und 13) befestigt. Die beiden Leiterbahnen sind aus einer gemeinsamen Blechplatine herausgestanzt. Die beiden Leiterbahnen (12 und 13) weisen zwei parallel zueinander verlaufende Endabschnitte (14) auf, welche zum Elektromotor hin abgewinkelt sind und in deren gabelförmig ausgeführten freien Enden die Kontaktanschlüsse (16) beim Montieren des Elektromotors klemmend eingeschoben werden. In Figur 3 sind die Endabschnitte (14) vor ihrem Abbiegen zum Elektromotor (5) hin durch eine gestrichelte Linie dargestellt. Die Endabschnitte (17) der beiden Leiterbahnen (12 und 13) sind als Flachsteckanschlüsse ausgeführt. Unterhalb der beiden Leiterbahnen ist eine aus elastischem Material bestehende Platte (18) an dem Motorträger (10) befestigt. Mit der elastischen Platte (18) liegt der Motorträger (10) an dem Leuchtensockel (19) an, an dessen umlaufenden Randbereich die Abdeckhaube (1) befestigt ist.

Die Warnleuchte ist durch die Aufnahmevorrichtung (20) auf der Unterseite des Leuchtensockels (19) auf ein Rohr (nicht dargestellt) aufsteckbar. Die Aufnahmevorrichtung (20) wird durch eine zylinderförmige Vertiefung in dem Leuchtensockel (19) gebildet. Innerhalb der Vertiefung (20) ist für die Glühlampe (2) und den Elektromotor (5) zentral der für die Stromzuleitung dienende Anschluß (21) und der für die Masseleitung dienende Anschluß (22) angeordnet. Der Anschluß (21) ist als Steckanschluß ausgeführt und wird von einem freien Endabschnitt eines als Kontaktstab dienenden Befestigungsbolzens (23) gebildet. Der Befestigungsbolzen ist in eine hülsenförmige öffnung im Boden der Vertiefung (20) eingesteckt, bis er mit seiner flanschartigen Verdickung (24) an der Stirnfläche der hülsenförmigen öffnung anliegt. Oberhalb des Leuchtensockels (19) ist auf den Befestigungsbolzen die aus dem Motorträger (10), den Leiterbahnen (12 und 13) der Platte (18) und dem Abtriebrad (14) bestehende Baueinheit aufgesetzt. Dabei geht der Befestigungsbolzen durch eine zentrale öffnung des hülsenförmigen Ansatzes (26), welcher an die Innenseite des Lagerzapfens (9) angeformt ist, hindurch. Der aus den Lagerzapfen herausragende Endabschnitt (27) ist ein Gewindeschaft, welcher in eine von der Kontaktfeder (28) gebildeten Mutter eingreift. Die Mutter ist zwischen zwei Ansätzen (29) eines zylinderförmigen Isolierteils (30) verdrehsicher gehalten. Das Isolierteil (30) ist in eine Aussparung eines freien Schenkels des U-förmig gebogenen Lampenträgers (31) eingesetzt und drückt diesen gegen die Stirnfläche des Lagerzapfens (9). Hierbei überragt der Lampenträger den Lagerzapfen (9) so weit radial nach außen, daß das Abtriebrad auf dem Lagerzapfen (9) zwar verdrehbar ist, jedoch in axialer Richtung fixiert ist. Die Kontaktfeder (28) ist aus einem Blechstreifen hergestellt und um eine quer zu ihrer Längsausdehnung verlaufenden Biegelinie V-förmig gebogen. Ein Schenkel der V-Form weist das Gewindeloch auf, in welches der Befestigungsbolzen (23) eingeschraubt ist, und der andere Schenkel weist die in seiner Außenseite eingebrachte Vertiefung (32) auf, deren Grund unter Verspannung an dem Mittelpol der Glühlampe (2) anliegt. Dadurch wird der Flansch der Glühlampe gegen die Innenseite des oberen freien Schenkels des U-förmig gebogenen Lampenträgers gedrückt. Hierbei geht der Glaskolben durch eine Aussparung des oberen Schenkels des Lampenträgers (31) hindurch. Eine solche Glühlampe kann sehr einfach und leicht ausgewechselt werden, da hierfür nur der obere Schenkel der V-förmigen Kontaktfeder niederzudrücken ist, um die Glühlampe aus ihrem Festsitz zu lösen. An den an der Stirnfläche des Lagerzapfens (9) anliegenden freien Schenkel des Lampenträgers (31) ist ein als Kontaktstab dienender Blechstreifen (33) angeformt, welcher nach unten hin abgewinkelt ist und durch einen Schlitz des an die Innenseite des Lagerzapfens angeformten Ansatzes (34) hindurchführt. Dabei verläuft der Blechstreifen (33) etwa parallel zu dem Befestigungsbolzen (23) und greift mit seinem freien Ende in eine schlitzartig ausgeführte öffnung (15) der Leiterbahn (13) klemmend ein. Aus der Leiterbahn (13) ist die den Anschluß (22) bildende Fahne freigeschnitten, welche nach unten hin abgewinkelt ist und durch eine öffnung in dem Leuchtensockel hindurchgeht und in die Vertiefung (20) hineinragt. Durch die durch das Abbiegen der Fahne (22) in der Hauptebene der Leiterbahn (13) entstandene Aussparung geht der Befestigungsbolzen (23) hindurch. Damit er in diesem Bereich mit der Leiterbahn (14) kontaktieren kann, ist aus dieser ein Leiterbahnabschnitt (35) freigeschnittten, welcher so aus der Hauptebene der Leiterbahn (12) herausgebogen ist, daß er mit seinem freien Endabschnitt an der Stirnfläche der Hülse (26) anliegt. Bei dieser Ausführungsform können somit die Anschlußfahne (22) und der Steckanschluß (21) sehr dicht beieinander liegen, so daß beide einen Mehrfachsteckanschluß für einen Mehrfachstecker bilden.

## Patentansprüche

1. Warnleuchte für Fahrzeuge mit den Merkmalen:
- die Warnleuchte weist eine lichtdurchlässige Abdeckhaube (1) auf, welche auf den Leuchtensockel (19) aufgesetzt ist,
- der Leuchtensockel (19) weist zum Aufstecken auf einen rohrförmigen Träger auf seiner Unterseite eine zentrale Aufnahmevorrichtung (20) auf,
- innerhalb der lichtdurchlässigen Abdeckhaube (1) ist um eine ortsfeste Glühlampe (2) herum ein Reflektor (3) drehbar angeordnet,
- der Reflektor (3) ist mit dem Abtriebrad (4) eines mit einem Elektromotor (5) gekoppelten Getriebes (6) verbunden und um einen hohl und zylinderförmig ausgeführten Lagerzapfen (9) verdrehbar gelagert,
- durch eine öffnung des Abtriebrades (4) und des Trägers (10) des Elektromotors (5) verlaufen zwei Stromzuführungen (23 und 33) zur Glühlampe hin,
- eine der beiden Stromzuführungen (23) ist zumindest in ihrer Längsausdehnung starr ausgeführt und dient an der Unterseite des Leuchtensockels (19) für einen Pol der Glühlampe (2) als Steckanschluß,
dadurch gekennzeichnet, daß
- die beiden Stromzuführungen (23 und 33) zur Glühlampe (2) hin aus zwei Kontaktstäben bestehen, welche in einem Abstand zueinander durch den aus Kunststoff bestehenden Lagerzapfen (9) hindurchgehen,
- unterhalb des Motorträgers (10) Leiterbahnen (12 und 13) verlaufen, welche die Kontaktstäbe (23 und 33) mit dem jeweiligen Kontaktanschluß (16) des Elektromotors (5) elektrisch verbinden,
- die Kontaktstäbe (23 und 33) durch eine öffnung (25 bzw. 15) in der Leiterbahn (12 bzw. 13) und/oder durch eine öffnung eines im Inneren des Lagerzapfens (9) angeformten Ansatzes (26 bzw. 34) hindurchgesteckt sind,
- auf der Unterseite des Leuchtensockels (19) für die Glühlampe (2) und den Elektromotor (5) ein gemeinsamer für die Stromzuleitung dienender Anschluß (21) und ein gemeinsamer für die Masseleitung dienender Anschluß (22) von nach unten weisenden Endabschnitten beider Kontaktstäbe oder eines Kontaktstabes (23) und einer Leiterbahn (22) gebildet werden.

2. Warnleuchte nach Anspruch 1, dadurch gekennzeichnet, daß die Kontaktstäbe (23 und 33) klemmend in die öffnungen (25 bzw. 15) der Leiterbahnen (12 bzw. 13) eingesteckt und/oder durchgesteckt sind.

3. Warnleuchte nach Anspruch 1 oder 2, dadurch gekennzeichnet, daß der Kontaktstab (23) den Motorträger (10) und das Abtriebrad (4) an dem Leuchtensockel (18) befestigt.

4. Warnleuchte nach Anspruch 3, dadurch gekennzeichnet, daß der Kontaktstab (23) von einem zentral durch den hohl und zylinderförmig ausgeführten Lagerzapfen (9) verlaufenden Befestigungsbolzen gebildet wird.

5. Warnleuchte nach Anspruch 4, dadurch gekennzeichnet, daß der Befestigungsbolzen (23) mit einer Verdickung (24) an der Unterseite des Leuchtensockels (19) anliegt und mit seinem Gewindeschaft (27) in eine Mutter (28) eingreift, welche unter Zwischenschaltung eines Isolierteils (30) gegen die Stirnfläche des Lagerzapfens (9) drückt.

6. Warnleuchte nach Anspruch 5, dadurch gekennzeichnet, daß die Verdickung (24) des Befestigungsbolzens flanschartig ausgeführt ist und als Handhabe zum Verdrehen des Befestigungsbolzens (19) dient.

7. Warnleuchte nach Anspruch 5 oder 6, dadurch gekennzeichnet, daß die Mutter (28) von einer Kontaktfeder gebildet wird, welche unter Vorspannung an einem Pol der Glühlampe (2) anliegt.

8. Warnleuchte nach Anspruch 7, dadurch gekennzeichnet, daß die Kontaktfeder (28) aus einem Blechstreifen hergestellt ist, welcher um eine quer zu seiner Längsausdehnung verlaufenden Biegelienie V-förmig gebogen ist.

9. Warnleuchte nach Anspruch 8, dadurch gekennzeichnet, daß in einen Schenkel der V-Form das Muttergewinde eingebracht ist und in den anderen Schenkel eine Vertiefung (32) eingedrückt ist, in welche der Mittelpol der Glühlampe (2) eingreift.

10. Warnleuchte nach einem der vorstehenden Ansprüche, dadurch gekennzeichnet, daß der in einem Abstand zu dem Befestigungsbolzen (23) verlaufende Kontaktstab (33) von einem Blechstreifen gebildet wird, welcher über einen Lampenträger (31) mit dem Sockel der Glühlampe (2) elektrisch verbunden ist.

11. Warnleuchte nach Anspruch 10, dadurch gekennzeichnet, daß der Blechstreifen (33) und der Lampenträger (31) einteilig aus einer Blechplatine hergestellt sind.

12. Warnleuchte nach einem der vorstehenden Ansprüche, dadurch gekennzeichnet, daß der Lampenträger (31) zwischen dem Isolierteil (30) und der Stirnfläche des Lagerzapfens (9) fest eingespannt ist.

13. Warnleuchte nach einem der vorstehenden Ansprüche, dadurch gekennzeichnet, daß der Lampenträger (31) senkrecht zur Drehachse des Reflektors (3) gesehen U-förmig ausgeführt ist, wobei der eine Schenkel an der Stirnfläche des Lagerzapfens (9) anliegt und den Lagerzapfen (9) radial nach außen überragt, während gegen die Innenseite des anderen freien Schenkels der Flansch der Glühlampe (2) durch die Kontaktfeder (28) gedrückt wird.

14. Warnleuchte nach einem der vorstehenden Ansprüche, dadurch gekennzeichnet, daß die V-förmige Kontaktfeder (28) mit dem als Mutter dienenden Schenkel zwischen zwei Ansätze (29) des Isolierteils (30) eingesetzt ist.

15. Warnleuchte nach einem der vorstehenden Ansprüche, dadurch gekennzeichnet, daß beide Leiterbahnen (12 und 13) aus einer gemeinsamen Blechplatine ausgestanzt sind.

16. Warnleuchte nach einem der vorstehenden Ansprüche, dadurch gekennzeichnet, daß die Leiterbahnen (12 und 13) an der Unterseite des Motorträgers (10) befestigt sind.

17. Warnleuchte nach einem der vorstehenden Ansprüche, dadurch gekennzeichnet, daß eine in einen Ansatz (34) im Inneren des Lagerzapfens (9) eingebrachte öffnung als Schlitz ausgeführt ist, durch welche der von einem Blechstreifen (33) gebildete Kontaktstab hindurchgesteckt ist.

18. Warnleuchte nach einem der vorstehenden Ansprüche, dadurch gekennzeichnet, daß eine in einen Ansatz (26) im Inneren des Lagerzapfens (9) eingebrachte öffnung von einer den Befestigungsbolzen (23) aufnehmenden Hülse (26) gebildet wird, welche durch Stege an die Innenseite des Lagerzapfens (9) angebunden ist.

19. Warnleuchte nach Anspruch 18, dadurch gekennzeichnet, daß an der dem Leuchtensockel (19) zugewandten Stirnfläche der Hülse (26) ein Leiterbahnabschnitt (35) anliegt, in den die den Befestigungsbolzen (23) klemmend aufnehmende öffnung (25) eingebracht ist.

20. Warnleuchte nach Anspruch 19, dadurch gekennzeichnet, daß die Hülse (26) zur Hauptfläche der Leiterbahnen (12 und 13) beabstandet ist und der Leiterbahnabschnitt (35) so aus der Hauptebene der Leiterbahnen herausgebogen ist, daß er mit seinem Endabschnitt an der Stirnfläche der Hülse (26) anliegt.

21. Warnleuchte nach Anspruch 20, dadurch gekennzeichnet, daß die Leiterbahn (13) durch Freischneiden einer Fahne (22) und Abwinkeln der Fahne (22) zur Aufnahmevorrichtung hin eine Aussparung aufweist, durch welche der Befestigungsbolzen (23) hindurchgeht.

22. Warnleuchte nach Anspruch 21, dadurch gekennzeichnet, daß die Fahne (22) in einem geringen Abstand parallel zum Befestigungsbolzen (23) verläuft.

23. Warnleuchte nach Anspruch 21 oder 22, dadurch gekennzeichnet, daß im Blechzuschnitt der Leiterbahnen (12 und 13) die Fahne (22) der Leiterbahn (13) in ihrer Längsausdehnung etwa in einem rechten Winkel zur Längsausdehnung des Leiterbahnabschnitts (35) verläuft.

24. Warnleuchte nach einem der vorstehenden Ansprüche, dadurch gekennzeichnet, daß beide Leiterbahnen (12 und 13) einen Flachsteckeranschluß (17) aufweisen.

25. Warnleuchte nach Anspruch 24, dadurch gekennzeichnet, daß die Flachsteckeranschlüsse (17) von parallel zueinander verlaufenden Enden der Leiterbahnen (12 und 13) gebildet werden.

26. Warnleuchte nach einem der vorstehenden Ansprüche, dadurch gekennzeichnet, daß der mit den beiden Kontaktanschlüssen (16) des Elektromotors (5) kontaktierende Endabschnitt (14) der Leiterbahnen (12 und 13) gabelförmig ausgeführt ist und die in die Gabel eingeschobenen Kontaktanschlüsse (16) des Elektromotors (5) klemmend aufnimmt.

## Claims

1. A warning lamp for vehicles, with the following features:
- the warning lamp has a transparent covering cap (1) which is placed on the lamp base (19),
- the lamp base (19) has a central seating device (20) for placement on a tubular support on its underside,
- a reflector (3) is rotatably disposed around a fixed bulb (2) inside the transparent covering cap (1),
- the reflector (3) is attached to the driven wheel (4) of a transmission (6) coupled to an electric motor (5) and is rotatably mounted about a bearing journal (9) of hollow cylindrical construction,
- two power leads (23 and 33) run to the bulb through an opening in the driven wheel (4) and in the support for the electric motor (5),
- one of the two power leads (23) is of rigid construction, at least in its longitudinal dimension, and serves as a plug-in connection for one terminal of the bulb (2) on the underside of the lamp base (19),
characterised in that
- the two power leads (23 and 33) to the bulb (2) consist of two contact rods which pass through the bearing journal (9) consisting of plastic at a distance from each other,
- strip conductors (12 and 13), which electrically connect the contact rods (23 and 33) to the respective contact connection (16) of the electric motor (5), run underneath the motor support (10),
- the contact rods (23 and 33) are inserted through an opening (25; 15) in the strip conductor (12; 13) and/or through an opening in a projection (26; 34) formed on the inside of the bearing journal (9),
- a common connection (21) serving for the power lead and a common connection (22) serving for the earth lead for the bulb (2) and the electric motor (5) are formed on the underside of the lamp base (19) from downwardly pointing end sections of the two contact rods or of a contact rod (23) and a strip conductor (22).

2. A warning lamp according to claim 1, characterised in that the contact rods (23 and 33) are inserted into and/or through the openings (25; 15) in the strip conductors (12; 13) so that they are pinched.

3. A warning lamp according to claim 1 or 2, characterised in that the contact rod (23) secures the motor support (10) and the driven wheel (4) to the lamp base (19).

4. A warning lamp according to claim 3, characterised in that the contact rod (23) is formed by a fastening bolt running centrally through the hollow, cylindrical bearing journal (9).

5. A warning lamp according to claim 4, characterised in that a thickened region (24) of the fastening bolt (23) is seated against the underside of the lamp base (19) and the threaded stem (27) of the fastening bolt engages in a nut (28) which presses against the end face of the bearing journal (9) with an insulating component (30) interposed therebetween.

6. A warning lamp according to claim 5, characterised in that the thickened region (24) of the fastening bolt is constructed in the manner of a flange and serves as a purchase for turning the fastening bolt (23).

7. A warning lamp according to claim 5 or 6, characterised in that the nut (28) is formed from a contact spring which is seated against one terminal of the bulb (2) under an initial stress.

8. A warning lamp according to claim 7, characterised in that the contact spring (28) is manufactured from a sheet metal strip which is bent into a V-shape about a bend line running transversely to its longitudinal dimension.

9. A warning lamp according to claim 8, characterised in that the thread of the nut is accommodated in one limb of the V-shape, and an indentation (32), in which the central terminal of the bulb (2) engages, is formed in the other limb.

10. A warning lamp according to any one of the preceding claims, characterised in that the contact rod (33) which runs at a distance from the fastening bolt (23) is formed from a sheet metal strip which is electrically connected to the base of the bulb (2) via a lampholder (31).

11. A warning lamp according to claim 10, characterised in that the sheet metal strip (33) and the lampholder (31) are manufactured in one piece from a sheet metal plate.

12. A warning lamp according to any one of the preceding claims, characterised in that the lampholder (31) is clamped fixed between the insulating component (30) and the end face of the bearing journal (9).

13. A warning lamp according to any one of the preceding claims, characterised in that the lampholder (31) is of U-shaped construction as viewed perpendicularly to the axis of rotation of the reflector (3), wherein one limb is seated against the end face of the bearing journal (9) and projects radially outwards beyond the bearing journal (9), whilst the flange of the bulb (2) is pressed against the inside of the other free limb by the contact spring (28).

14. A warning lamp according to any one of the preceding claims, characterised in that the limb of the V-shaped contact spring (28) which serves as the nut is inserted between two projections (29) on the insulating component (30).

15. A warning lamp according to any one of the preceding claims, characterised in that both strip conductors (12 and 13) are punched out from a common sheet metal plate.

16. A warning lamp according to any one of the preceding claims, characterised in that the strip conductors (12 and 13) are fastened to the underside of the motor support (10).

17. A warning lamp according to any one of the preceding claims, characterised in that an opening provided in a projection (34) inside the bearing journal (9) is constructed as a slot through which the contact rod formed from a sheet metal strip (33) is inserted.

18. A warning lamp according to any one of the preceding claims, characterised in that an opening provided in a projection (26) inside the bearing journal (9) is formed from a sleeve (26) which houses the fastening bolt (23) and which is attached by means of stays to the inside of the bearing journal (9).

19. A warning lamp according to claim 18, characterised in that a strip conductor section (35), in which the opening (25) is provided which clamps the fastening bolt (23), is seated against the end face of the sleeve (26) which faces the lamp base (19).

20. A warning lamp according to claim 19, characterised in that the sleeve (26) is at a distance from the major surface of the strip conductors (12 and 13), and the strip conductor section (35) is bent out of the principal plane of the strip conductors so that its end portion is seated against the end face of the sleeve (26).

21. A warning lamp according to claim 20, characterised in that the strip conductor (13) has a cut-out which is formed by cutting a vane (22) in it and bending the vane (22) towards the seating device, through which cut-out the fastening bolt (23) passes.

22. A warning lamp according to claim 21, characterised in that the vane (22) runs at a short distance from and parallel to the fastening bolt (23).

23. A warning lamp according to claim 21 or 22, characterised in that in the sheet metal section of the strip conductors (12 and 13) the vane (22) of the strip conductor (13) runs with its longitudinal dimension approximately at right angles to the longitudinal dimension of the strip conductor section (35).

24. A warning lamp according to any one of the preceding claims, characterised in that both strip conductors (12 and 13) have a flat plug-in connector (17).

25. A warning lamp according to claim 24, characterised in that the flat plug-in connectors (17) are formed from ends of the strip conductors (12 and 13) which run parallel to each other.

26. A warning lamp according to any one of the preceding claims, characterised in that the end portion (14) of the strip conductors (12 and 13) which contacts the two contact connections (16) of the electric motor (5) is of forked construction and receives and pinches the contact connections (16) of the electric motor (5) which are inserted into the fork.

## Revendications

1. Gyrophare pour véhicule possédant les caractéristiques suivantes :
- le gyrophare présente un capot de recouvrement (1) qui est monté sur le socle (19) du feu,
- pour l'emboîtement sur un support tubulaire, le socle (19) du feu présente un dispositif de réception central (20) sur sa face inférieure,
- un réflecteur (3) est monté rotatif autour d'une lampe à incandescence (2) à l'intérieur du capot de recouvrement transparent (1),
- le réflecteur (3) est relié à la roue de sortie (4) d'un mécanisme (6) accouplé à un moteur électrique (5) et est monté pour tourner autour d'un tourillon (9) de configuration creuse et cylindrique,
- deux amenées de courant (23 et 33) s'étendent à travers une ouverture de la roue de sortie (4) et du support (10) du moteur électrique (5) pour aboutir à la lampe à incandescence,
- une des deux amenées de courant (23) est réalisée rigide du moins dans son extension longitudinale et sert, à la face intérieure du socle (19) du feu, de connexion à broche pour un des pôles de la lampe à incandescence (2),
caractérisé en ce que :
- les deux amenées de courant (22 et 33) aboutissant à la lampe à incandescence (2) sont composées de deux broches de contact qui traversent, à un certain écartement mutuel, le tourillon (9) réalisé en matière plastique,
- au-dessous du support (10) du moteur, s'étendent des pistes conductrices (12 et 13) qui connectent électriquement les broches de contact (23 et 33) à la connexion de contact (16) correspondante du moteur électrique (5),
- les broches de contact (23 et 33) sont enfilées à travers une ouverture (25 ou 15) de la piste conductrice (12 ou 13) et/ou à travers une ouverture d'une saillie (26 ou 39) formée dans le volume intérieur du tourillon (9),
- sur la face inférieure du socle (19) du feu, qui reçoit la lampe à incandescence (2), et le moteur électrique (5), une connexion (21) commune servant pour l'amenée du courant, et une connexion commune (22) servant pour le conducteur de masse, sont formées par des segments terminaux, dirigés vers le bas, des deux broches de contact, ou d'une broche de contact (23), et une piste conductrice (22).

2. Gyrophare selon la revendication 1, caractérisé en ce que les broches de contact (23 et 33) sont emmanchées avec serrage dans les ouvertures (25 ou 15) des pistes conductrices (12 ou 13) et/ou enfilées avec serrage à travers ces ouvertures.

3. Gyrophare selon la revendication 1 ou 2, caractérisé en ce que la broche de contact (23) fixe le support (10) du moteur et la roue de sortie (4) au socle (18) du feu.

4. Gyrophare selon la revendication 3, caractérisé en ce que la broche de contact (23) est formée par une vis de fixation qui s'étend en position centrale à travers le tourillon (9) creux et cylindrique.

5. Gyrophare selon la revendication 4, caractérisé en ce que la vis de fixation (23) est appuyée par un renflement (24) contre la face inférieure du socle (19) du feu, et est en prise par sa tige filetée (27) dans un écrou (28) qui s'applique contre la face frontale du tourillon (9) avec interposition d'une pièce isolante (30).

6. Gyrophare selon la revendication 5, caractérisé en ce que le renflement (24) de la vis de fixation est réalisé sous la forme d'une collerette et sert de prise pour faire tourner la vis de fixation (19).

7. Gyrophare selon la revendication 5 ou 6, caractérisé en ce que l'écrou (28) est formé par un ressort de contact qui est appuyé avec précontrainte contre un pôle de la lampe à incandescence (2).

8. Gyrophare selon la revendication 7, caractérisé en ce que le ressort de contact (28) est fabriqué à partir d'une bande de tôle qui est repliée en V autour d'une ligne de pli s'étendant transversalement à son extension longitudinale.

9. Gyrophare selon la revendication 8, caractérisé en ce que le filetage de l'écrou est formé dans une branche de la forme de V tandis que, dans l'autre branche, est embouti un renfoncement (32) dans lequel s'engage le pôle central de la lampe à incandescence (2).

10. Gyrophare selon une des revendications précédentes, caractérisé en ce que la broche de contact (33) qui s'étend à un certain écartement de la vis de fixation (23) est formée par une bande de tôle qui est reliée électriquement au socle de la lampe à incandescence (2) par l'intermédiaire d'un support de lampe (31).

11. Gyrophare selon la revendication 10, caractérisé en ce que la bande de tôle (33) et le support de lampe (31) sont fabriqués en une seule pièce dans une plaque de tôle.

12. Gyrophare selon une des revendications précédentes, caractérisé en ce que le support de lampe (31) est serré solidement entre la pièce isolante (30) et la surface frontale du tourillon (9).

13. Gyrophare selon une des revendications précédentes, caractérisé en ce que le support de lampe (31) est réalisé en forme de U, vu transversalement à l'axe de rotation du réflecteur (3), une des branches étant en contact avec la surface frontale du tourillon (9) et débordant radialement du tourillon (9) vers l'extérieur tandis que la collerette de la lampe à incandescence (2) est pressée contre la face intérieure de l'autre branche libre, par le ressort de contact (28).

14. Gyrophare selon une des revendications précédentes, caractérisé en ce que le ressort de contact (28) en forme de V est intercalé, par sa branche servant d'écrou, entre deux saillies (29) de la pièce isolante (30).

15. Gyrophare selon une des revendications précédentes, caractérisé en ce que les deux pistes conductrices (12 et 13) sont découpées dans une même plaque de tôle.

16. Gyrophare selon une des revendications précédentes, caractérisé en ce que les pistes conductrices (12 et 13) sont fixées à la face inférieure du support (10) du moteur.

17. Gyrophare selon une des revendications précédentes, caractérisé en ce qu'une ouverture ménagée dans une saillie (34) à l'intérieur du tourillon (9) est réalisée sous la forme d'une fente à travers laquelle la broche de contact formée par une bande de tôle (33) est enfilée.

18. Gyrophare selon une des revendications précédentes, caractérisé en ce qu'une ouverture ménagée dans une saillie (26) à l'intérieur du tourillon (9) est formée par un manchon (26) qui reçoit la vis de fixation (23) et qui est relié à la face intérieure du tourillon (9) par des nervures.

19. Gyrophare selon la revendication 18, caractérisé en ce que, contre la face frontale du manchon (26) qui est dirigée vers le socle (19) du feu est appli-. qué un segment de piste conductrice (35) dans lequel est pratiquée l'ouverture (25) qui reçoit la vis de fixation (23) avec serrage.

20. Gyrophare selon la revendication 19, caractérisé en ce que le manchon (26) est placé à écartement de la surface principale des pistes conductrices (12 et 13) et le segment (35) de la piste conductrice est replié en dehors du plan général des pistes conductrices de manière à être appuyé par son segment terminal contre la surface frontale du manchon (26).

21. Gyrophare selon la revendication 20, caractérisé en ce que la piste conductrice (13) présente, par suite du découpage d'une languette (22) et repliage de la languette (22) en direction du dispositif de réception, un évidement à travers lequel passe la vis de fixation.

22. Gyrophare selon la revendication 21, caractérisé en ce que la languette (22) s'étend parallèlement à la vis de fixation (23) à une petite distance de celle-ci.

23. Gyrophare selon la revendication 21 ou 22, caractérisé en ce que, dans le flan de tôle découpée des pistes conductrices (12 et 13), la languette (22) de la piste conductrice (13) s'étend, en extension longitudinale, à peu près à angle droit par rapport à l'extension longitudinale du segment (35) de la piste conductrice.

24. Gyrophare selon une des revendications précédentes, caractérisé en ce que les deux pistes conductrices (12 et 13) présentent une connexion (17) formant une broche plate.

25. Gyrophare selon la revendication 24, caractérisé en ce que les connexions (17) en forme de broche plate sont formées par des extrémités des pistes conductrices (12 et 13) qui s'étendent parallèlement entre elles.

26. Gyrophare selon une des revendications précédentes, caractérisé en ce que les segments terminaux (14) des pistes conductrices (12 et 13) qui sont en contact avec les deux connexions de contact du moteur électrique (5) sont en forme de fourche et reçoivent avec serrage les connexions de contact (16) du moteur électrique (5) qui sont emmanchées dans les fourches.
